# FASCICULE DE BREVET EUROPEEN

(11) **EP 0 457 648 B1**
(45) Date de publication et mention de la délivrance du brevet: **30.10.1996**
(21) Numéro de dépôt: 91401177.0
(22) Date de dépôt: 06.05.1991
(51) Int. Cl.: B32B 27/08, B65B 55/06, C08L 29/04

(54) **Utilisation d'un film barrière constitué d'un alliage à base d'un copolymère éthylène-alcool vinylique comme film thermoformable**
Anwendung eines Sperrfilms aus einer Ethylen-Vinylalkohol-Copolymermischung als thermoformbarer Film
Use of a barrier film of an ethylene vinyl alcohol copolymer based blend as thermoformable film

(30) Priorité: 18.05.1990 FR 9006238
(43) Date de publication de la demande: 21.11.1991
(73) Titulaire: SOPLARIL S.A., F-62002 Arras (FR)
(72) Inventeur: Engelaere, Jean-Claude, F-59210 Coudekerque-Branche (FR)
(74) Mandataire: Foiret, Claude Serge

(56) Documents cités:
- EP-A- 0 229 476
- EP-A- 0 246 102
- EP-A- 0 277 839
- EP-A- 0 331 509
- EP-A- 0 418 129
- US-A- 4 572 854
- US-A- 4 777 095

## Description

La présente invention concerne l'utilisation comme film thermoformable pour la production d'objets thermoformés d'un film barrière constitué d'au moins six couches coextrudées de résines thermoplastiques dont une couche de polyamide directement en contact avec une couche d'un mélange à base de copolymère éthylène-alcool vinylique. Ce film, résistant à l'action de l'eau chaude, et plus particulièrement à la stérilisation, permet de réaliser par thermoformage des emballages de denrées périssables, en particulier pour produits alimentaires, dont la durée de conservation des denrées emballées est sensiblement augmentée.

Afin d'assurer une conservation des denrées périssables tels que les produits alimentaires, il est nécessaire d'assurer non seulement une protection contre les poussières mais également contre l'humidité, contre certains gaz tels que l'oxygène et le gaz carbonique et contre les odeurs.

A cette fin on utilise des résines polymériques dénommées résines barrières qui possèdent des propriétés de perméabilité aux gaz et à la vapeur d'eau c'est-à-dire qui sont plus ou moins perméables aux gaz et à la vapeur d'eau.

D'une façon générale les films sont composés de une à plusieurs couches constituées par des polymères imperméables aux gaz et des polymères imperméables à la vapeur d'eau.

Ainsi, lorsque la perméabilité à l'oxygène doit être faible on a recours à des polymères dont les propriétés barrière à ce gaz sont très performantes tels que par exemple les copolymères éthylène-alcool vinylique (EVOH) qui sont reconnus comme d'excellents matériaux à cet égard.

Si l'on veut obtenir une protection suffisante à la vapeur d'eau on emploie une couche barrière constituée par des polyoléfines telles que le polypropylène.

Les exigences en imperméabilité aux gaz et à la vapeur d'eau variant d'une forme de conditionnement à l'autre, d'un produit alimentaire à l'autre on utilise des films qui peuvent être constitués de une à plusieurs couches de polymère ayant des propriétés de perméabilité aux gaz et à la vapeur d'eau différentes.

Afin d'améliorer la qualité des produits alimentaires et d'augmenter leur durée de conservation il est nécessaire de conditionner les produits alimentaires de façon aseptique.

A cette fin de nombreux procédés existent. On peut citer par exemple la pasteurisation et la stérilisation.

Dans ces procédés l'emballage -ou la denrée périssable emballée- est soumis à l'action de l'eau chaude (85°C - 100°C) ou à l'action de la vapeur d'eau surchauffée pendant des temps allant de quelques secondes à plusieurs heures. Dans le cas par exemple de la stérilisation la température atteint 121°C voire 130°C-140°C. Il est alors nécessaire que l'emballage constitué par un film ayant une ou plusieurs couches "barrières" résiste mécaniquement à l'action combinée de l'eau et de la température ainsi qu'également aux pressions qui peuvent atteindre 3 à 4 bars.

On constate que certains films à base notamment d'EVOH subissent au moment de la stérilisation ou sous l'action de l'eau chaude des dégradations qui se manifestent par un fripage de la couche atteinte voire un délaminage total du film multicouche.

Le film barrière thermoformable utilisé selon l'invention, possède une résistance améliorée à l'eau chaude et à la vapeur d'eau surchauffée et permettant une conservation supérieure à trois mois des denrées périssables, est constitué d'au moins six couches de résines thermoplastiques dont au moins deux couches sont de polyoléfine, au moins une couche est du polyamide, au moins deux couches sont un liant de coextrusion, au moins une couche est un mélange en poids de :
- 42,5 à 99,5 % d'EVOH
- 0,4 à 42,5 % de polypropylène
- 0,1 à 15,0 % d'agent compatibilisant,
   l'agent compatibilisant étant choisi parmi les copolymères greffés de formule AaMbXcPd dans laquelle :
- AaMb correspond à un (co)polymère-tronc,
- XcPd correspond à des polymères greffés sur le (co)polymères-tronc,
- A est un motif obtenu à partir d'une α-mono-oléfine contenant de 2 à 8 atomes de carbone,
- M est choisi dans le-groupe constitué par :
   . les motifs obtenus à partir d'une ou plusieurs α-mono-oléfine contenant de 2 à 8 atomes de carbone,
   . les motifs obtenus à partir d'un acrylate d'alkyle pouvant être polymérisé avec une des α-mono-oléfines précédentes,
- X est un motif obtenu à partir d'un monomère pouvant être gréffé radicalairement sur un homo ou copolymère d'α-mono-oléfine, possédant une fonction pouvant réagir avec un motif amine, et représenté par l'une des formules : 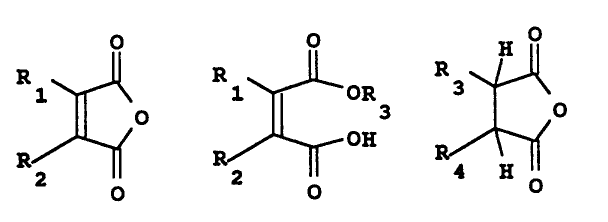 dans lesquelles :
   . R₁ et R₂ sont soit l'hydrogène, soit une chaîne alkyle linéaire ou ramifiée contenant jusqu'à 8 atomes de carbone, l'un en moins de R₁ et R₂ représentant l'hydrogène,
   . R₃ est l'hydrogène ou un groupement alkyle linéaire ou ramifié contenant jusqu'à 10 atomes de carbone,
   . R₄ est un groupement alcényle linéaire ou ramifié contenant jusqu'à 12 atomes de carbone,
- P provient d'un oligomère de polyamide de formule : 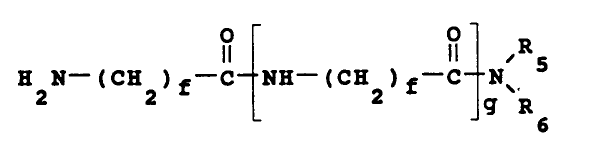 avec :
   f : un nombre de 3 à 11,
   g : un nombre de 3 à 80
   R₅ : hydrogène ou groupement alkyle linéaire ou ramifié contenant jusqu'à 20 atomes de carbone,
   R₆ : un groupement possédant jusqu'à 20 atomes de carbone alkyle ou alcényle linéaire ou ramifié, un radical aromatique ou leur combinaison,
      a, b, c, d sont des nombres tels que :
      . a est une valeur variant de 0 à 5000,
      . la somme a + b est comprise entre 350 et 45000,
      . c est choisi de telle sorte que la teneur pondérale du motif X greffé sur le (co)polymère-tronc par rapport au copolymère greffé avec X est comprise entre 500 ppm et 10 %,
      . d est supérieur à 0 et inférieur ou égal à c, les couches étant disposées de façon que les deux couches externes soient de polyoléfine et qu'une couche interne de polyamide se trouve directement au contact d'une couche de mélange, les deux couches externes de polyoléfine étant liées à la couche de polyamide et à la couche de mélange par l'intermédiaire d'une couche de liant de coextrusion.
Il est constaté que ledit mélange à lui seul permet, en intermédiaire aux couches de polyoléfine, de réaliser des films possédant une bonne résistance à l'eau chaude et à la vapeur d'eau et assurant la conservation des denrées périssables. Cependant lorsque ces films sont thermoformés, il est constaté que d'une part le film est fragile et cassant au thermoformage pour une épaisseur totale inférieure à 250 µm et d'autre part la répartition des contraintes de thermoformage se fait de façon irrégulière entraînant dans le temps une rupture de la couche d'alliage, en particulier aux angles de l'objet thermoformé. De ce fait la propriété barrière du film thermoformé est limitée à environ trois mois maximum.

Par contre, en associant directement à la couche dudit mélange une couche de polyamide, il est constaté que le film possède une bonne répartition des contraintes de formage. Cette propriété permet d'éviter les surépaisseurs dans les coins de l'objet thermoformé et de réaliser une bonne répartition d'épaisseur des différentes couches du film. La conséquence de cette propriété du film se traduit surtout par une homogénéité de la couche dudit mélange ce qui évite sa rupture et prolonge la longévité de la propriété barrière de l'objet thermoformé. Dans un tel objet thermoformé, tels que pots, barquettes, ou encore boites, les denrées périssables peuvent être conservées plus de trois mois, par exemple de l'ordre de six mois à un an environ.

L'intérêt de l'utilisation de ce film thermoformable se trouve non seulement dans la réalisation des emballages thermoformés permettant une longue durée de conservation de denrées périssables, mais encore dans l'obtention de ce résultat avec des emballages thermoformés dont l'épaisseur totale des parois peut être inférieure à 250 µm et généralement comprise, pour des raisons économiques entre 180 et 250 µm.

L'intérêt d'un tel emballage réside encore dans le fait que, même après stérilisation, il reste translucide ce qui permet au consommateur de parfaitement distinguer son contenu.

Le mélange comprenant au moins un polypropylène, au moins un copolymère d'éthylène-alcool vinylique et au moins un agent compatibilisant est connu en lui-même. Il est décrit dans la demande de brevet européen 342066 qui revendique l'agent compatibilisant, entre autres, des polyoléfines et particulièrement du propylène avec l'EVOH. Le contenu de cette demande de brevet est incorporé par référence dans la présente. Cet agent compatibilisant est représenté par un copolymère greffé de formule

Aa Mb Xc Pd dans laquelle :
- AaMb correspond au(co)polymère-tronc,
- XcPd correspond à des polymères greffés sur le (co)polymère-tronc,
- A est un motif obtenu à partir d'une α-mono-oléfine contenant de 2 à 8 atomes de carbone, et de préférence un motif obtenu à partir de propylène,
- M est choisi dans le groupe constitué par :
   . les motifs obtenus à partir d'une α-mono-oléfine telles que définies précédemment, qui peuvent être simplement mélangées ensemble ou être copolymérisées de façon statistique ou séquencées, et de préférence dont l'une des α-mono-oléfines est l'éthylène,
   . les motifs obtenus à partir d'un acrylate d'alkyle pouvant être polymérisé avec une des α-mono-oléfines telles que définies précédemment,
- les motifs A et M qui constituent ledit (co)polymèretronc sont copolymérisés de façon statistique ou séquencés ou sont simplement mélangés,
- X est un motif obtenu à partir d'un monomère pouvant être greffé radicalairement sur un homo ou copolymère d'α-monooléfine et possédant une fonction pouvant réagir avec un motif amine,
- P provient d'un oligomère de polyamide de formule : 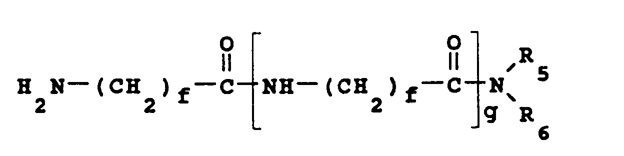 dans laquelle :
- f est un nombre de 3 à 11,
- g est un nombre de 3 à 80 et de préférence compris entre 15 et 55,
- R₅ est l'hydrogène ou un groupement alkyle linéaire ou ramifié contenant jusqu'à 20 atomes de carbone,
- R₆ est un groupement possédant jusqu'à 20 atomes de carbone alkyle ou alcényle linéaire ou ramifié, un radical cycloaliphatique, saturé ou non, un radical aromatique ou leur combinaison,
- a, b, c et d sont des nombres tels que :
   . a est une valeur variant de 0 à 5000 et de préférence entre 350 et 2000,
   . la somme a + b est comprise entre 350 et 45000 et de préférence entre 500 et 10000,
   . c est choisi de telle sorte que la teneur pondérale du motif greffé sur le (co)polymère-tronc par rapport au copolymère greffé avec X est compris entre 500 ppm et 10 %, de préférence inférieur à 2 %, et mieux compris entre 5000 ppm et 1,5%,
   . d est supérieur à 0 et inférieur ou égal à c, et de préférence au moins égal à 0,3 c.

Par (co)polymère-tronc de formule AaMb, dans laquelle a, b, A et M sont tels que définis précédemment, on entend tout copolymère composé de motifs A et M, obtenus à partir de monomères polymérisés de façon statistique ou séquencée, ou éventuellement tout mélange de polymères obtenus par polymérisations séparées de monomères dont dérivent les motifs A et M.

Cette copolymérisation ou ce mélange peuvent s'effectuer selon les procédés connus. A titre d'exemple, on peut citer la copolymérisation de propylène et d'α-oléfine en présence de catalyseur ZIEGLER ou de coordination.

Les monomères possédant le motif X préférés sont l'anhydride citraconique, l'acide fumarique, l'acide mésaconique, l'anhydride d'acide 3-allylsuccinique, et tout particulièrement, l'anhydride maléique.

Pratiquement l'agent compatibilisant le plus courant retenu est choisi parmi les copolymères greffés de formule AMXP dans laquelle :
- AM représente un copolymère tronc obtenu par copolymérisation de propylène et d'α-oléfines
- X est choisi dans le groupe constitué par l'anhydride citraconique, l'acide fumarique, l'acide mésaconique, l'anhydride d'acide 3-allylsuccinique et l'anhydride maléique,
- P représente un oligomère de polyamide dérivé de caprolactame, d'acide amino-11 undécanoïque ou de dodécalactame.

L'EVOH est un copolymère, connu en lui-même constitué essentiellement d'unités éthylène et alcool vinylique. Il peut contenir de faibles quantités d'autres unités monomères, en particulier d'unité ester de vinyle. Ces copolymères peuvent être obtenus par saponification ou alcoolyse complète ou totale de copolymère éthylène-ester de vinyle. Parmi les esters de vinyle, l'acétate de vinyle est le monomère préféré. Le degré de saponification ou d'alcoolyse est au moins égal en moles à 90 %, et de préférence est compris entre 54 et 99,5 %. la proportion en moles d'éthylène dans l'EVOH est comprise dans l'intervalle de 3 à 75 % et de préférence de 10 à 50 %.

Le polypropylène est un polymère constitué essentiellement d'unités propylène. Il peut contenir de faibles quantités au plus 40 % molaire d'une autre unité monomère en particulier éthylène et/ou une ou plusieurs α-oléfine contenant 4 à 6 atomes de carbone. On utilise en particulier un homopolypropylène ou un copolymère bloc du propylène avec 0,5 à 30 % molaire d'éthylène ou un copolymère statistique de propylène et d'éthylène contenant 0,1 à 30 % molaire d'éthylène.

L'agent compatibilisant peut être incorporé en mélange EVOH-propylène en quantité de 0,1 à 30 % en poids par rapport au poids du mélange.

Le mélange est constitué de

| | |
|---|---|
| EVOH | 42,5 - 99,5 % poids |
| Polypropylène | 42,5 - 0,4 % poids |
| Agent compatibilisant | 0,1 - 15,0 % poids |

Le polyamide de la couche directement en contact avec la couche du mélange est un produit commercial classique, il est cependant de préférence choisi parmi les polyamides 6 et les polyamides 6-6.

Les polyoléfines servant à fabriquer les couches externes du film thermoformable sont choisies parmi les polymères ou copolymères commerciaux connus tels que polypropylène, polyéthylène et leurs copolymères.

Les couches de polyoléfine sont unies à la couche du mélange et à la couche de polyamide par l'intermédiaire d'une couche de liant de coextrusion. Ce dernier largement connu de l'homme de métier assure une meilleure adhésion entre les couches de polyoléfine-EVOH d'une part et polyoléfinepolyamide d'autre part. Il s'agit généralement d'une polyoléfine modifiée, telle qu'un polypropylène greffé anhydride maléique.

Le film barrière thermoformable peut être obtenu par extrusion à plat ou par extrusion soufflage à des températures comprises entre 200 et 260°C. Sa structure ainsi que celle des parois des emballages thermoformés peuvent être définis par les épaisseurs respectives habituellement recommandées des différentes couches :

| | |
|---|---|
| - la première couche externe de polyoléfine | de 45 à 80 µm |
| - la première couche de liant de coextrusion | de 10 à 30 µm |
| - la couche de polyamide | de 25 à 60 µm |
| - la couche du mélange | de 10 à 40 µm |
| - la seconde couche de liant de coextrusion | de 10 à 30 µm |
| - la seconde couche externe de polyoléfine | de 45 à 80 µm |

L'épaisseur totale recommandée du film barrière thermoformable est comprise entre 180 et 250 µm.

Enfin la présente invention concerne également de façon générale l'utilisation du film barrière thermoformable pour la réalisation d'un emballage thermoformé pour la conservation des denrées périssables et plus particulièrement des produits alimentaires pendant une durée d'au moins trois mois, résistant à l'eau chaude et de façon avantageuse translucide en l'absence de charge spécifique, l'épaisseur de ses parois étant inférieure à 250 µm. De préférence l'épaisseur de ces parois est comprise entre 180 et 250 µm.

L' exemple suivant illustre l'invention.

### EXEMPLE

Un film barrière thermoformable, d'une épaisseur totale de 190 µm, est coextrudé sur une ligne "Cast" composée de 5 extrudeuses et d'un bloc de distribution permettant l'extrusion simultanée de six couches de résines thermoplastiques.

La structure du film est

| | |
|---|---|
| Polypropylène homopolymère | 50 µm |

| Liant de coextrusion : | |
|---|---|
| Polypropylène modifié anhydride maléique (ADMER QF500E) | 20 µm |
| Polyamide 6 | 30 µm |
| Mélange à base d'EVOH (SOARNOL SF12 ^{R} ) | 20 µm |
| Liant de coextrusion (ADMER QF500E) | 20 µm |
| Polypropylène homopolymère | 50 µm |

Les températures d'extrusion sont les suivantes :

| | |
|---|---|
| Polypropylène | 250°C |
| Liant de coextrusion | 265°C |
| Mélange à base d'EVOH | 255°C |
| Polyamide 6 | 255°C |

La température de la filière est de 255°C et le débit de la ligne est d'environ 450 kg/heure.

Le film obtenu de grammage de 184 g/m² est transformé par thermoformage à environ 125°C sur une machine du type MULTIVAC en barquettes de 225 x 115 x 35 mm (Emballage 1).

A titre comparatif sont thermoformées des barquettes à partir de film de polyamide 6 et de polypropylène contrecollés (Emballage 2) et de film coextrudé de polypropylène, de liant de coextrusion, de mélange d'EVOH (SOARNOL SF4), de liant de coextrusion et de polypropylène (Emballage 3).

Dans les mêmes conditions de mise en oeuvre et sur la même machine sont conditionnées des pommes de terre précuites. Les barquettes sont fermées sous vide au moyen d'un opercule fixé à environ 185°C sous 2 à 3 bars. De préférence, pour optimiser la qualité de la soudure assurant la fermeture de la barquette après sa mise sous vide poussé il est recommandé d'utiliser le même polypropylène pour la fabrication de la barquette et de l'opercule.

Les pommes de terre conditionnées sont stérilisées à 130°C pendant 30 minutes après la phase de montée en température puis refroidie. La pression dans l'enceinte de stérilisation est contrôlée pour éviter l'éclatement des emballages.

Les pommes de terre ainsi emballées sont soumises à un vieillissement accéléré.

| | **OPERCULE** | **BARQUETTE** |
|---|---|---|
| **Emballage 1** | Polyamide 6:30 µm -Mélange d'EVOH : 10µm Liant coextrusion : 20 µm - Polypropylène 50 µm | Polypropylène 50 µm Liant coextrusion 20 µm - Polyamide 6 : 30 µm - Mélange d' EVOH : 20 µm -Liant de coextrusion : 20 µm - Polypropylène : 50 µm |
| **Emballage 2** | Polyamide 6:30 µm Polypropylène : 75 µm contre-collés | Polyamide 6:40 µm Polypropylène : 75 µm contre-collés |
| **Emballage 3** | Polyamide 6 (15 µm) contre-collé sur un film polypropylène (50 µm) - Liant de coextrusion (10 µm) -Mélange d'EVOH (10 µm) Liant de coextrusion (10 µm) -Polypropylène (50 µm) | Polypropylène : 65 µm Liant de coextrusion : 20 µm- Mélange d'EVOH : 20 µm - Liant de coextrusion : 20 µm -Polypropylène : 65 µm |

Lors de la fabrication des emballages, il n'est pas constaté de différence entre 1 et 2. Par contre l'emballage 3 présente une grande fragilité caractérisée par des déchirures au niveau du film inférieur lors de son thermoformage.

Les essais de vieillisement accélérés sont réalisés selon la norme AFNOR V8-401, utilisée pour le contrôle des produits mis en conserves métalliques. Pour cela, une série de chaque type d'emballage a été mise dans une étuve à 37°C et une autre dans une étuve à 55°C. L'expérience démontre qu'un produit résistant 14 jours à 37°C possède une durée de conservation de 3 mois à température ambiante (environ 20°C).

Dans ces conditions aucune modification d'aspect n'est apparue sur les emballages 1 et 2. Par contre apparait un grisaillement dans les angles de l'emballage 3 ce qui correspond à une perte des propriétés barrières dans ces zones.

Les essais de vieillissement accéléré à 37°C ont été prolongés jusqu'à 30 jours. Seul l'emballage 1 ne subit pas de modification d'aspect, ce qui laisse présumer une conservation de plus de 6 mois à température ambiante. L'emballage 2 présente un grisaillement sur toute sa surface caractérisant une dégradation totale des pommes de terre conditionnées. Dans le cas de l'emballage 3, le grisaillement dans les coins s'est fortement amplifié ce qui rend le conditionnement non commercialisable.

A 55°C, seul l'emballage 1 ne subit pas de dégradation au bout de 14 jours. Les emballages 2 et 3 présentent un grisaillement total ou partiel rendant les pommes de terre impropres à la consommation.

En outre les essais organoleptiques réalisés sur les pommes de terre de l'emballage 1 ont confirmé la parfaite conservation de celles-ci dans les deux cas.

## Revendications

1. Utilisation d'un film barrière comme film thermoformable pour la production d'objets thermoformés, celui-ci étant constitué d'au moins six couches de résines thermoplastiques dont au moins deux couches sont de polyoléfine, au moins une couche est du polyamide, au moins deux couches sont un liant de coextrusion, au moins une couche est un mélange en poids de:
- 42,5 à 99,5 % d'EVOH
- 0,4 à 42,5 % de polypropylène
- 0,1 à 15,0 % d'agent compatibilisant,
l'agent compatibilisant étant choisi parmi les copolymères greffés de formule AaMbXcPd dans laquelle :
- AaMb correspond au(co)polymère-tronc,
- XcPd correspond à des polymères greffés sur le (co)polymère-tronc,
- A est un motif obtenu à partir d'une α-mono-oléfine contenant de 2 à 8 atomes de carbone,
- M est choisi dans le groupe constitué par :
. les motifs obtenus à partir d'une ou plusieurs α-mono-oléfines contenant de 2 à 8 atomes de carbone,
. les motifs obtenus à partir d'un monomère pouvant être polymérisé avec une des α-mono-oléfines précédentes,
- X est un motif obtenu à partir d'un monomère pouvant être greffé radicalairement sur un homo- ou copolymère d'α-mono-oléfine et possédant une fonction pouvant réagir avec un motif amine, et représenté par l'une des formules: 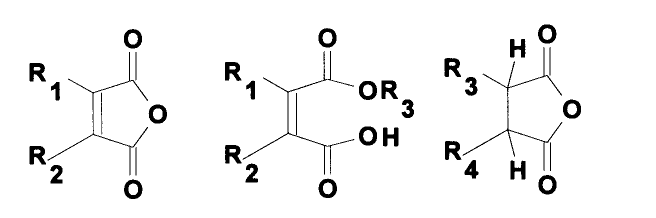 dans lesquelles:
. R₁ et R₂ sont soit l'hydrogène, soit une chaîne alkyle linéaire ou ramifiée contenant jusqu'à 8 atomes de carbone, l'un au mois de R₁ et R₂ représentant l'hydrogène,
. R₃ est l'hydrogène, ou un groupe alkyle linéaire ou ramifié contenant jusqu'à 10 atomes de carbone,
. R4 est un groupe alcényle linéaire ou ramifié contenant jusqu'à 12 atomes de carbone,
- P provient d'un oligomère de polyamide de formule : 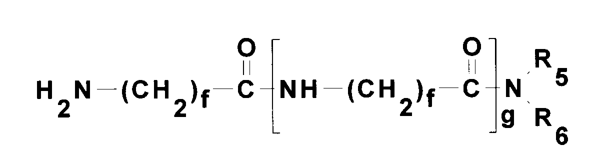 avec :
f : un nombre de 3 à 11,
g : un nombre de 3 à 80
R₅ : un hydrogène ou un groupe alkyle linéaire ou ramifié contenant jusqu'à 20 atomes de carbone,
R₆ : un groupe, possédant jusqu'à 20 atomes de carbone, alkyle ou alcényle linéaire ou ramifié, un radical aromatique ou leur combinaison,
a, b, c, d sont des nombres tels que :
. a est une valeur variant de 0 à 5000 ,
. la somme a + b est comprise entre 350 et 45000,
. c est choisi de telle sorte que la teneur pondérale du motif X greffé sur le (co)polymère-tronc par rapport au copolymère greffé avec X est comprise entre 500 p.p.m. et 10 %,
. d est supérieur à 0 et inférieur ou égal à c, les couches étant disposées de façon que les deux couches externes soient de polyoléfine et qu'une couche interne de polyamide se trouve directement au contact d'une couche de mélange, les deux couches externes de polyoléfine étant liées à la couche de polyamide et à la couche de mélange par l'intermédiaire d'une couche de liant de coextrusion.

2. Utilisation d'un film barrière selon la revendication 1, dans lequel X est un motif obtenu à partir d'un monomère choisi parmi l'anhydride citraconique, l'acide fumarique, l'acide mésaconique, l'anhydride d'acide 3-allylsuccinique, l'anhydride maléïque.

3. Utilisation d'un film barrière selon la revendication 1 ou 2, dans lequel P représente un oligomère de polyamide dérivé de caprolactame, d'acide amino-11 undécanoïque ou de dodécalactame.

4. Utilisation d'un film barrière selon l'une des revendications 1 à 3, celui-ci ayant une épaisseur inférieure à 250 µm.

5. Utilisation d'un film barrière selon l'une des revendications 1 à 3, celui-ci ayant une épaisseur comprise entre 180 et 250 µm.

6. Utilisation d'un film barrière selon l'une des revendications 1 à 3, celui-ci ayant une structure constituée de :
| | |
|---|---|
| une première couche externe de polyoléfine | de 45 à 80 µm |
| une première couche de liant de coextrusion | de 10 à 30 µm |
| une couche de polyamide | de 25 à 60 µm |
| une couche de mélange | de 10 à 40 µm |
| une seconde couche de liant de coextrusion | de 10 à 30 µm |
| une seconde couche externe de polyoléfine | de 45 à 80 µm. |

## Claims

1. Use of a barrier film as a thermoformable film for the production of thermoformed articles, this film consisting of at least six layers of thermoplastic resins, of which at least two layers are polyolefin, at least one layer is polyamide, at least two layers are a coextrusion binder, at least one layer is a mixture by weight of:
- 42.5 to 99.5 % of EVOH
- 0.4 to 42.5 % of polypropylene
- 0.1 to 15.0 % of compatibilizing agent,
the compatibilizing agent being chosen from the graft copolymers of formula AaMbXcPd in which:
- AaMb corresponds to the backbone (co)polymer,
- XcPd corresponds to polymers grafted onto the backbone (co)polymer,
- A is a unit obtained from an α-monoolefin containing 2 to 8 carbon atoms,
- M is chosen from the group consisting of:
- the units obtained from one or more α-monoolefins containing from 2 to 8 carbon atoms,
- the units obtained from a monomer being capable of being polymerized with one of the preceding α-monoolefins,
- X is a unit obtained from a monomer capable of being grafted by means of radicals onto an α-monoolefin homo- or copolymer and containing a functional group capable of reacting with an amine unit, and denoted by one of the formulae: 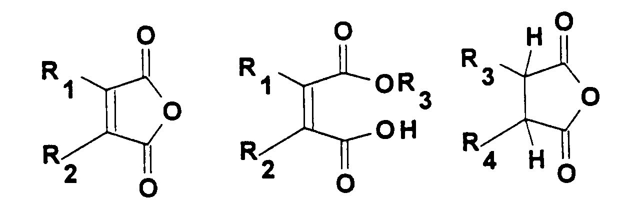 in which:
R₁ and R₂ are either hydrogen or a linear or branched alkyl chain containing up to 8 carbon atoms, at least one of R₁ and R₂ denoting hydrogen,
R₃ is hydrogen or a linear or branched alkyl group containing up to 10 carbon atoms,
R₄ is a linear or branched alkenyl group containing up to 12 carbon atoms,
- P originates from a polyamide oligomer of formula: 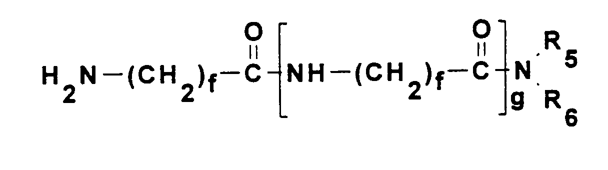 with:
f: a number from 3 to 11,
g: a number from 3 to 80
R₅ : a hydrogen or a linear or branched alkyl group containing up to 20 carbon atoms,
R₆: a group containing up to 20 carbon atoms, linear or branched alkyl or alkenyl, an aromatic radical or their combination,
a, b, c and d are numbers such that:
a is a value varying from 0 to 5000, the sum a + b is between 350 and 45000,
c is chosen so that the weight content of the unit X grafted onto the backbone (co)polymer in relation to the copolymer grafted with X is between 500 p.p.m. and 10 %,
d is greater than 0 and smaller than or equal to c, the layers being placed so that the two outer layers are of polyolefin and that an inner polyamide layer is situated directly in contact with a layer of mixture, the two outer polyolefin layers being bonded to the polyamide layer and to the layer of mixture through the intermediacy of a layer of coextrusion binder.

2. Use of a barrier film according to Claim 1, in which X is a unit obtained from a monomer chosen from citraconic anhydride, fumaric acid, mesaconic acid, the anhydride of 3-allylsuccinic acid and maleic anhydride.

3. Use of a barrier film according to Claim 1 or 2, in which P denotes a polyamide oligomer derived from caprolactam, from 11-amino undecanoic acid or from dodecalactam.

4. Use of a barrier film according to one of Claims 1 to 3, this film having a thickness lower than 250 µm.

5. Use of a barrier film according to one of Claims 1 to 3, this film having a thickness of between 180 and 250 µm.

6. Use of a barrier film according to one of Claims 1 to 3, this film having a structure consisting of:
| | |
|---|---|
| a first outer layer of polyolefin | of 45 to 80 µm |
| a first layer of coextrusion binder | of 10 to 30 µm |
| a layer of polyamide | of 25 to 60 µm |
| a layer of mixture | of 10 to 40 µm |
| a second layer of coextrusion binder | of 10 to 30 µm |
| a second outer layer of polyolefin | of 45 to 80 µm. |

## Patentansprüche

1. Verwendung einer Barrierefolie als wärmeformbare Folie zur Herstellung von durch thermische Formgebung erzeugten Gegenständen, die aus mindestens sechs Schichten von thermoplastischen Harzen bestehen, wobei mindestens zwei Schichten aus einem Polyolefin, mindestens eine Schicht aus einem Polyamid, mindestens zwei Schichten aus einem Coextrusions-Bindemittel und mindestens eine Schicht aus einem Gemisch von
- 42,5 bis 99,5 Gew.-% EVOH,
- 0,4 bis 42,5 Gew.-% Polypropylen und
- 0,1 bis 15 Gew.-% Kompatibilisierungsmittel bestehen, wobei das Kompatibilisierungsmittel unter den Pfropfcopolymeren der Formel AaMbXcPd ausgewählt ist, wobei
- AaMb einem Grund(co)polymer entspricht,
- XcPd Polymeren, die auf das Grund(co)polymer gepfropft wurden, entspricht,
- A eine Einheit ist, die aus einem α-Monoolefin mit 2 bis 8 Kohlenstoffatomen erhalten wurde,
- M unter
. Einheiten, die aus einem oder mehreren α-Monoolefinen mit 2 bis 8 Kohlenstoffatomen erhalten wurden, und
. Einheiten, die aus einem Monomer erhalten wurden, das mit den vorgenannten α-Monoolefinen polymerisiert werden kann,
ausgewählt ist,
- X eine Einheit ist, die aus einem Monomer erhalten ist, das radikalisch auf ein Homo- oder Copolymer eines α-Monoolefins gepfropft werden kann, eine Gruppe aufweist, die mit einer Aminogruppe reagieren kann und einer der folgenden Formeln: 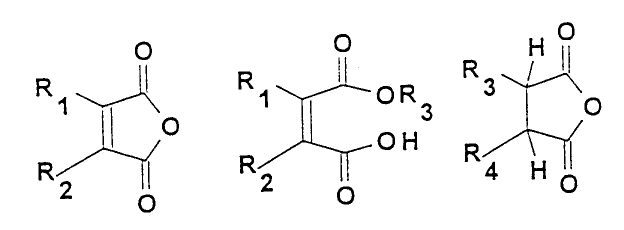 entspricht, worin bedeuten:
. R₁ und R₂ Wasserstoff oder eine geradkettige oder verzweigte Alkylgruppe mit bis zu 8 Kohlenstoffatomen, wobei mindestens eine der Gruppen R₁ und R₂ Wasserstoff bedeutet,
. R₃ Wasserstoff oder eine geradkettige oder verzweigte Alkylgruppe mit bis zu 10 Kohlenstoffatomen und
. R₄ eine geradkettige oder verzweigte Alkenylgruppe mit bis zu 12 Kohlenstoffatomen,
- P von einem Polyamid-Oligomer der Formel 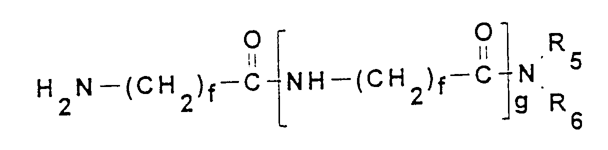 stammt, worin bedeuten:
f: eine Zahl von 3 bis 11,
g: eine Zahl von 3 bis 80
R₅: Wasserstoff oder eine geradkettige oder verzweigte Alkylgruppe mit bis zu 20 Kohlenstoffatomen und
R₆: eine geradkettige oder verzweigte Alkyl- oder Alkenylgruppe mit bis zu 20 Kohlenstoffatomen, eine aromatische Gruppe oder eine Kombination davon, und
- a, b, c und d Zahlen sind, wobei
. a einen Wert im Bereich von 0 bis 5000 aufweist,
. die Summe a + b im Bereich von 350 bis 45 000 liegt,
. c so ausgewählt ist, daß der Gewichtsanteil der auf das Grund(co)polymer gepfropften Einheit X, bezogen auf das mit X gepfropfte Copolymer, im Bereich von 500 ppm bis 10 % liegt, und
. d einen Wert von größer 0 und höchstens gleich c aufweist,
wobei die Schichten so angeordnet sind, daß die beiden äußeren Schichten aus Polyolefin bestehen, eine innere Polyamid-Schicht sich in direktem Kontakt mit einer Gemisch-Schicht befindet und die beiden äußeren Polyolefin-Schichten mit der Polyamid-Schicht und der Gemisch-Schicht über eine Schicht aus Coextrusions-Bindemittel verbunden sind.

2. Verwendung einer Barrierefolie nach Anspruch 1, worin X eine Einheit bedeutet, die aus einem unter Citraconsäureanhydrid, Fumarsäure, Mesaconsäure, 3-Allylbernsteinsäureanhydrid und Maleinsäureanhydrid ausgewählten Monomer erhalten wurde.

3. Verwendung einer Barrierefolie nach Anspruch 1 oder 2, worin P ein von Caprolactam, 11-Aminoundecansäure oder Dodecalactam abgeleitetes Polyamid-Oligomer darstellt.

4. Verwendung einer Barrierefolie nach einem der Ansprüche 1 bis 3, die eine Dicke unter 250 µm aufweist.

5. Verwendung einer Barrierefolie nach einem der Ansprüche 1 bis 3, die eine Dicke im Bereich von 180 bis 250 µm aufweist.

6. Verwendung einer Barrierefolie nach einem der Ansprüche 1 bis 3, die folgende Struktur aufweist:
| | |
|---|---|
| eine erste äußere Polyolefin-Schicht | von 45 bis 80 µm, |
| eine erste Coextrusions-Bindemittel-Schicht | von 10 bis 30 µm, |
| eine Polyamid-Schicht | von 25 bis 60 µm, |
| eine Gemisch-Schicht | von 10 bis 40 µm, |
| eine zweite Coextrusions-Bindemittel-Schicht | von 10 bis 30 µm |
| und | |
| eine zweite äußere Polyolefin-Schicht | von 45 bis 80 µm. |
